(19) Europäisches Patentamt / European Patent Office / Office européen des brevets

(11) EP 1 771 064 B1

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(21) Anmeldenummer: **05763729.0**

(22) Anmeldetag: **18.07.2005**

(51) Int Cl.:
***A01N 25/32*** *(2006.01)* ***A01N 47/40*** *(2006.01)*
***A01N 51/00*** *(2006.01)*

(86) Internationale Anmeldenummer:
**PCT/EP2005/007793**

(87) Internationale Veröffentlichungsnummer:
**WO 2006/008110 (26.01.2006 Gazette 2006/04)**

(54) **INSEKTIZIDE AUF BASIS VON NEONICOTINOIDEN UND SAFENERN**

INSECTICIDES BASED ON NEONICOTINOIDS AND SAFENERS

INSECTICIDES A BASE DE NEONICOTINOIDES ET DE PHYTOPROTECTEURS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.07.2004 DE 102004035130**
**18.11.2004 DE 102004055581**

(43) Veröffentlichungstag der Anmeldung:
**11.04.2007 Patentblatt 2007/15**

(73) Patentinhaber: **Bayer CropScience Aktiengesellschaft**
**40789 Monheim (DE)**

(72) Erfinder:
- **FISCHER, Reiner**
**40789 Monheim (DE)**
- **ANDERSCH, Wolfram**
**51469 Bergisch Gladbach (DE)**
- **HUNGENBERG, Heike**
**40764 Langenfeld (DE)**
- **THIELERT, Wolfgang**
**51519 Odenthal (DE)**
- **WILLMS, Lothar**
**65719 Hofheim (DE)**

(56) Entgegenhaltungen:
**US-A1- 2004 023 801**

- **PATENT ABSTRACTS OF JAPAN Bd. 2003, Nr. 12, 5. Dezember 2003 (2003-12-05) & JP 2003 321310 A (BAYER CROPSCIENCE KK), 11. November 2003 (2003-11-11)**
- **JONITZ, A. ET AL: "Seed testing and the effect of insecticidal active ingredients on the germination and emergence of hybrid maize seed Seed testing and the effect of insecticidal active ingredients on the germination and emergence of hybrid maize seed" PFLANZENSCHUTZ-NACHRICHTEN BAYER (GERMAN EDITION) CODEN: PNBYAT; ISSN: 0340-1723, Bd. 56, Nr. 1, 2003, Seiten 173-207, XP002355424**
- **SAAYMAN-DU TOIT A E J: "Phytotoxicity resulting from a combination of a pre-emergence herbicide and a pesticide seed dressing in maize (Zea mays L.)." SOUTH AFRICAN JOURNAL OF PLANT AND SOIL, Bd. 19, Nr. 3, 2002, Seiten 156-158, XP009057381 ISSN: 0257-1862**
- **EBEL, ROBERT C. ET AL: "Phytotoxicity of the systemic insecticide imidacloprid on tomato and cucumber in the greenhouse Phytotoxicity of the systemic insecticide imidacloprid on tomato and cucumber in the greenhouse" HORTTECHNOLOGY CODEN: HORTFI; ISSN: 1063-0198, Bd. 10, Nr. 1, 2000, Seiten 144-147, XP009057322**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 771 064 B1

## Beschreibung

Die Erfindung betrifft die Verwendung insecktizid wirksamer Wirkstoffkombinationen, die eine oder mehrere Verbindungen aus der Gruppe der Neonicotinoide einerseits und zumindest eine die Kulturpflanzen-Verträglichkeit verbessernde Verbindung andererseits enthalten zur verbesserten Insekterbekämpfung in verschiedenen Nutzpflanzenkulturen.

Es ist bekannt, dass Verbindungen der formel (I)

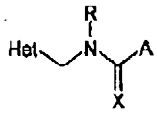
(I)

worin

Het für einen jeweils gegebenenfalls einfach oder mehrfach durch Fluor, Chlor, Methyl oder Ethyl substituierten Heterocyclus ausgewählt aus der folgenden Gruppe von Heterocyclen steht:

Pyrid-3-yl, Pyrid-5-yl, 3-Pyridinio, 1-Oxido-5-pyridinio, 1-Oxido-5-pyridinio, Tetrahydrofuran-3-yl, Thiazol-5-yl,

A für $C_1$-$C_6$-Alkyl, -N($R^1$)($R^2$) oder S($R^2$) steht, worin

$R^1$ für Wasserstoff, $C_1$-$C_6$-Alkyl, Phenyl-$C_1$-$Q_4$-Alkyl, $C_3$-$C_6$-Cycloalkyl, $C_2$-$C_6$-Alkenyl oder $C_2$-$C_6$-Alkinyl steht, und

$R^2$ für $C_1$-$C_6$-Alkyl, $C_2$-$C_6$-Alkenyl, $C_2$-$C_6$-Alkinyl, -C(=O)-$CH_3$ oder Benzyl steht,

R für Wasserstoff, $C_1$-$C_6$-Alkyl, $C_2$-$C_6$-Alkenyl, $C_2$-$C_6$-Alkinyl, -C(=O)-$CH_3$ oder Benzyl steht oder gemeinsam mit $R^2$ für eine der folgenden Gruppen steht:

$-CH_2-CH_2-$, $-CH_2-CH_2-CH_2-$, $-CH_2-O-CH_2-$, $-CH_2-S-CH_2-$, $-CH_2-NH-CH_2-$, $-CH_2-N(CH_3)-CH_2-$, und

X für N-$NO_2$, N-CN oder CH-$NO_2$ steht,

eine insektizide Wirkung aufweisen (siehe z.B. EP-A1-192 606, EP-A2-580 533, EP-A2-376 279, EP-A2-235 725).

Die Verträglichkeit dieser Verbindungen gegenüber den damit behandelten Pflanzen, insbesondere gegenüber monokotylen Kulturpflanzen, ist jedoch nicht bei allen Aufwandmengen und unter allen Bedingungen ganz zufriedenstellend.

Überraschenderweise wurde nun gefunden, dass Insektizide aus der Gruppe der Neonicotinoide bei gemeinsamer Anwendung mit den im weiteren beschriebenen, die Kulturpflanzen-Verträglichkeit verbessernden Verbindungen (so genannten Safenem bzw. Antidots) eine unerwartet gute Kulturpflanunverträgllchkeit haben und besonders vorteilhaft als breit wirksame Kombinationspräparate zur Bekämpfung von Insekten verwendet werden können.

Gegenstand der Erfindung sind daher insektizide Mittel umfassend einen wirksamen Gehalt an zumindest Imidacloprid, Clothianidin oder Thiacloprid als Verbindungen der Formel (I)

(b) zumindest eine die Kulturpflanzen-Verträglichkeit verbessernde Verbindung aus der folgenden Gruppe von Verbindungen:

5-Chlor-chinolin-8-oxy-essigsäure-(1-methyl-hexylester) (Cloquintocet-mexyl) 3-(2-Chlor-benzyl)-1-(1-methyl-1-phenyl-ethyl)-harnstoff (Cumyluron), Piperidin-1-thiocarbonsäure-S-1-methyl-1-phenyl ethylester (Dimepiprate) 4,6-Dichlor-2-phenyl-pyrimidin (Fenclorim), Ethyl-4,5-dihydro-5,5-diphenyl-3-isoxasolcarboxylat (Isoxadifen-ethyl) Diethyl-1-(2,4-dichlor-phenyl-4,5-dihydro-5-methyl-1H-pyrazol-3,5-di-carboxylat (Mefenpyr-diethyl)

oder
die Verbindung der Formel IIe-5

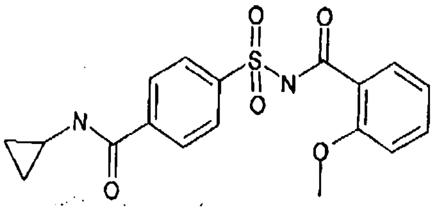

II-e-5

zur Bekämpfung von Insekten.

In den Definitionen sind die Kohlenwamerstoffketten, wie in Alkyl, Alkenyl oder Alkandiyl - auch in Verbindung mit Heteroatomen, wie in Alkoxy - jeweils geradkettig oder verzweigt.

Gegebenenfalls substituierte Reste können, sofern nichts anderes angegeben ist, einfach oder mehrfach substituiert sein, wobei bei Mehrfachsubstitutionen die Substituenten gleich oder verschieden sein können.

Die Verbindungen der Formel (I) können, auch in Abhängigkeit von der Art der Substituenten, als geometrische und/oder optische Isomere oder Isomerengemische, in unterschiedlicher Zusammensetzung vorliegen, die gegebenenfalls in üblicher Art und Weise getrennt werden können. Sowohl die reinen Isomeren als auch die Isomerengemische, sowie deren Verwendung und sie enthaltende Mittel sind Gegenstand der vorliegenden Erfindung. Im folgenden wird der Einfachheit halber jedoch stets von Verbindungen der Formel (I) gesprochen, obwohl sowohl die reinen Verbindungen als gegebenenfalls auch Gemische mit unterschiedlichen Anteilen an isomeren Verbindungen gemeint sind.

Als bevorzugte Verbindungen der Formel (I) sollen die Neonicotinoide genannt werden, die in "The Pesticide Manual", 13th Edition, 2003 (British Crop Protection Council) genannt werden,

Eine ganz besonders bevorzugte Verbindung ist Imidacloprid der Formel

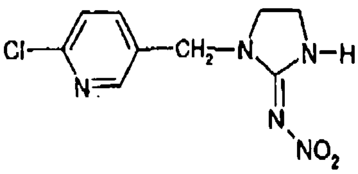

,

die z.B. bekannt ist aus EP A1 0 192 060.

Eine weitere ganz besonders bevorzugte Verbindung ist Clothianidin der Formel

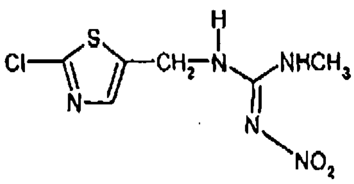

,

die z.B. bekannt ist aus EP A2 0 376 279.

Eine weitere ganz besonders bevorzugte Verbindung ist Thiacloprid der Formel

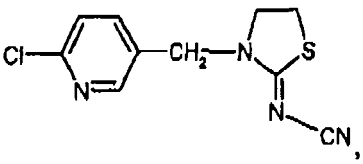

,

die z.B. bekannt ist aus EP A2 0 235 725.

Die oben aufgeführten allgemeinen oder in Vorzugsbereichen aufgeführten Restedofinitionen bzw. Erläuterungen können untereinander, also auch zwischen den jeweiligen Bereichen und Vorzugsbereichen beliebig kombiniert werden.

Erfindungsgemäß bevorzugt wird die Verwendung der Verbindungen der Formel (I), in welchen eine Kombination der vorstehend als bevorzugt (vorzugsweise) aufgeführten Bedeutungen vorliegt.

Erfindungsgemäß besonders bevorzugte wird die Verwendung der Verbindungen der Formel (I), in welchen eine Kombination der vorstehend als besonders bevorzugt aufgeführten Bedeutungen vorliegt.

Erfindungsgemäß ganz besonders bevorzugt wird die Verwendung der Verbindungen der Formel (I), in welchen eine Kombination der vorstehend als ganz besonders bevorzugt aufgeführten Bedeutungen vorliegt.

Gesättigte oder ungesättigte Kohlenwassersioffreste wie Alkyl oder Alkenyl könnten, auch in Verbindung mit Heteroatomen, wie z.B. in Alkoxy, soweit möglich, jeweils geradkettig oder verzweigt sein.

Gegebenenfalls substituierte Reste können, sofern nichts anderes angegeben ist, einfach oder mehrfach substituiert sein, wobei bei Mehrfachsubstitutionen die Substituenten gleich oder verschieden sein können,

Die Herbizid-Safener können, auch in Abhängigkeit von der Art der Substituenten, als geometrische und/oder optische Isomere oder Isomerengemische, in unterschiedlicher Zusammensetzung vorliegen, die gegebenenfalls in üblicher Art und Weise getrennt werden können. Sowohl die reinen Isomeren als auch die Isomerengemische können in den erfindungsgemäßen Mitteln eingesetzt und der erfindungsgemäßen Verwendung zugeführt werden. Im Folgenden wird der Einfachheit halber jedoch stets von Herbizid-Safenern gesprochen, obwohl sowohl die reinen Verbindungen als gegebenenfalls auch Gemische mit unterschiedlichen Anteilen an isomeren Verbindungen gemeint sind.

Ein Beispiel für die als erfindungsgemäß Herbizid-Safener ganz besonders bevorzugten Verbindungen der Formel (IIe) ist in der nachstehenden Tabelle aufgeführt.

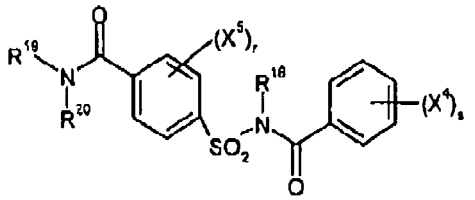
(IIe)

**Tabelle** Beispiel für die Verbindungen der Formel (IIe)

| Beispiel-Nr. | $R^{16}$ | $R^{19}$ | $R^{20}$ | (Positionen) $(X^4)_3$ | (Positionen) $(X^5)_r$ |
|---|---|---|---|---|---|
| IIe-5 | H | H | 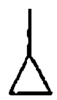 | (2)$OCH_3$ | - |

Erfindungsgemäß bevorzugt werden Wirkstoffkombinationen umfassend jeweils zumindest einen der Wirkstoffe der Formel (I) ausgewählt aus Imidacloprid, Clothianidin oder Thiacloprid, und jeweils zumindest einen der vorstehend genannten Safener.

Als die Kulturpflanzen-Verträglichkeit verbessernde Verbindung [Komponente b)] sind Cloquintocet-mexy], Isoxadifen-ethyl, Mefenpyr-diethy), Fenclorim, Cumyluron, Dimepiperate und die Verbindung IIe-5 am meisten bevorzugt, wobei Cloquintocet-mexyl und Mefenpyr-diethyl besonders hervorgehoben seien.

Besonders bevorzugte Beispiel für die erfindungsgemäßen selektiv insektiziden und/oder akariziden Kombinationen aus jeweils einem Wirkstoff der Formel (I) und jeweils einem der oben definierten Safener sind in der nachstehenden Tabelle aufgeführt.

**Tabelle** Beispiele für die erfindungsgemäßen Kombinationen

| Wirkstoffe der Formel (I) | Safener |
|---|---|
| Imidacloprid | Cloquintocet-mexyl |
| Imidacloprid | Isoxadifen-ethyl |
| Imidacloptid | Mefenpyr-diethyl |
| Imidacloprid | Fenclorim |
| Imidacloprid | Cumyluron |
| Imidacloprld | Dimepiperate |
| Imidacloprid | IIe-5 |

(fortgesetzt)

| **Wirkstoffe der Formel (I)** | **Safener** |
|---|---|
| Clothianidin | Cloquintocet-mexyl |
| Clothianidin | Isoxadifen-ethyl |
| Clothianidin | Mefenpyr-diethyl |
| Clothianidin | Fenclorim |
| Clothianidin | Cumyluron |
| Clothianidin | Dimepiperate |
| Clothianidin | IIe-5 |
| Thiacloprid | Cloquintocet-mexyl |
| Thiacloprid | Isodifen-ethyl |
| Thiacloprid | Mefenpyr-diethyl |
| Thiacloprid | Fenclorim |
| Thiacloprid | Cumyluron |
| Thiacloprid | Dimepiperate |
| Thiacloprid | IIe-5 |

Die als Safener zu verwendenden Verbindungen Cloquintocet-mexyl, Isoxadifen-ethyl, Mefenpyr-diethyl und Fenclorim sind bekannt und/oder können nach an sich bekannten Verfahren hergestellt werden.

Die als Safener zu verwendende Verbindung der Formel (II-e-5) ist bekannt und/oder kann nach an sich bekannten Verfahren hergestellt werden (vgl, WO-A-99166795 / US-A-6251827).

Es wurde nun überraschend gefunden, dass die oben definierten Wirkstoffkombinationen aus den Verbindungen der allgemeinen Formel (I) und Safenern (Antidots) aus der oben aufgeführten Gruppe (b) bei sehr guter Nutzpflanzenverträglichkeit eine gute insektizide Wirksamkeit aufweisen und in verschiedenen Kulturen zur Schädlingsbekämpfung verwendet worden können.

Dabei ist es als völlig überraschend anzusehen, dass Verbindungen aus der oben aufgeführten Gruppe (b) bofähigt sind, die insektizide Wirksamkeit der Verbindungen der Formel (I) teilweise zu verstärken, so dass eine synergistische Wirkung zu verzeichnen ist.

Hervorgehoben sei hierbei die besonders vorteilhafte Wirkung der besonders bevorzugten Kombinationspartner aus der Gruppe (b), insbesondere hinsichtlich der Anwendung in Getreidepflanzen, wie z.B. Weizen, Hafer, Gerste, Triticale und Roggen, aber auch von Mais, Hirse, Reis, Zuckerrohr, Soja, Kartoffeln, Baumwolle, Raps, Tabak, Hopfen sowie Obstpflanzen (umfassend Kernobst wie z.B. Äpfel und Birnen, Steinobst wie z.B. Pfirsichen, Nektarinen, Kirschen, Pflaumen und Aprikosen, Zilrusfrüchte wie z.B. Orangen, Grapefruits, Limetten, Zitronen, Kumquats, Mandarinen und Satsumas, Nüsse wie z.B. Pistazien, Mandeln, Walnüssen und Pecannüssen, tropischen Früchten wie z.B. Mangos, Papayas, Ananas, Datteln und Bananen, und Weintrauben).

Die Kombinationen können auch zum Schutz von Gemüse verwendet werden. Dazu gehören unter anderm Artischocken, Auberginen, Blumenkohl, Broccoli, grüne Bohnen, Erbsen, Fenchel, Chicorée, Gurken, Kohlrabi, Kopfsalat, Kresse, Lauchgemüse, Mangold, Möhren, Paprika, Rhabarber, Rote Beeto, Rotkohl, Rosenkohl, Sellerie, Rüben, Tomaten, Kastanien, Schnittbohnen, Schwarzwurzeln, Mais, Spargel, Speiserüben. Spinat, Weißkohl, Wirsing, Zwiebeln, Zucchini.

Die wirkstoffkombinationen können im Allgemeinen z.B. bei den folgenden Pflanzen verwendet werden:

Dikotyle Kulturen der Gattungen: Gossyplum, Glycine, Beta, Daucus, Phaseolus, Pisum, Solanum, Linum, Ipomoea, Viela, Nicotiana, Lycopersicon, Arachis, Brassica, Lactuca, Cucumis, Cuburbita, Hellanthus.

Monokotyle Kulturen der Gattungen: Oryza, Zea, Triticum, Hordeum, Avena, Secale, Sorghum, Panicum, Saccharum, Ananas, Asparagus, Allium.

Die Verwendung der Wirkstoffkombinationen ist jedoch keineswegs auf diese Gattungen beschränkt, sondern erstreckt sich in gleicher Weise auch auf andere Pflanzen.

Der vorteilhafte Effekte der Kulturpflanzen-Verträglichkeit der Wirkstoffkombinationen ist bei bestimmten Konzentrationsverhältnissen besonders stark ausgeprägt, Jedoch können die Gewichtsverhältnisse der Wirkstoffe in den Wirkstoffkornblnationen in relativ großen Bereichen variiert werden. Im Allgemeinen entfallen auf 1 Gewichtsteil Wirkstoff der Formel (I) oder dessen Salzen 0,001 bis 1000 Gewichtsteile, vorzugsweise 0,01 bis 100 Gewichtsteile, besonders bevorzugt 0,05 bis 10 Gewichtsteile und am meisten bevorzugt 0,07 bis 1,5 Gewichtsteile einer der oben unter (b) genannten, die Kulturpflanzen Verträglichkeit verbessernden Verbindungen (Antidots/Safener).

Insbesondere eignen sich die erfindungsgemäßen Mischungen auch zur Behandlung von Saatgut. So entsteht ein großer Teil des durch Schädlinge verursachten Schadens an Kulturpflanzen bereits durch den Befall des Saatguts während der Lagerung und nach dem Einbringen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanzen führen kann. Es besteht daher ein insbesondere großes Interesse daran, das Saatgut und die keimende Pflanzen durch den Einsatz geeigneter Mittel zu schützen,

Die Bekämpfung von Schädlingen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellen gelöst werden können. So ist es erstrebenswert, Verfahren mm Schutz des Saatguts und der keimenden Pflanze zu entwickeln, die das zusätzliche Ausbringen von Pflanzenschutzmitteln nach der Saat oder nach dem Auflaufen der Pflanzen überflüssig machen. Es ist weiterhin erstrebenswert, die Menge des eingesetzten Wirkstoffs dahingehend zu optimieren, dass das Saatgut und die keimende Pflanze vor dem Befall durch Schädlinge bestmöglich geschützt wird, ohne jedoch die Pflanze selbst durch den eingesetzten Wirkstoff zu schädigen. Insbesondere sollten Verfahren zur Behandlung von Saatgut auch die intrinsischen insektiziden Eigenschaften transgener Pflanzen einbeziehen, um einen optimalen Schutz des Saatguts und der keimenden Pflanze bei einem minimalen Aufwand an Pflanzenschutzmitteln zu erreichen.

Die vorliegende Erfindung bezicht sich daher insbesondere auch auf ein Verfahren zum Schutz von Saatgut und keimenden Pflanzen vor dem Befall von Schädlingen, indem das Saatgut mit einem erfindungsgemäßen Mittel behandelt wird. Die Erfindung bezieht sich ebenfalls auf die Verwendung der erfindungsgemäßen Mittel zur Behandlung von Saatgut zum Schutz des Saatguts und der keimenden Pflanze vor Schädlingen, Weiterhin bezieht sich die Erfindung auf Saatgut, welches zum Schutz vor Schädlingen mit einem erfindungsgemäßen Mittel behandelt wurde.

Einer der Vorteile der vorliegenden Erfindung ist es, dass aufgrund der besonderen systemischen Eigenschaften der erfindungsgemäßen Mittel die Behandlung des Saatguts mit diesen Mitteln nicht nur das Saargut selbst, sondern auch die daraus hervorgehenden Pflanzen nach dem Auflaufen vor Schädlingen schützt. Auf diese Weise kann die unmittelbare Behandlung der Kultur zum Zeitpunkt der Aussaat oder kurz danach entfallen.

Ein weiterer Vorteil besteht in der synergistischen Erhöhung der insektiziden Wirksamkeit der ertindungsgemäßen Mittel gegenüber den Jeweiligen Einzelwirkstoffen. Damit wird eine Optimisrung der Menge des eingesetzien Wirkstoffs ermöglicht. Als besonders vorteilhaft ist es dabei zu betrachten, dass die eventuell durch die verwendeten insektiziden Wirkstoffe entstehenden Schäden an den auflaufenden Pflanzen durch die Anwesenheit der Mischpartner der Gruppe (b) in überraschend guter Weite eingeschränkt oder völlig vermieden werden können.

Ebenso ist es als vorteilhaft anzusehen, dass die erfindungsgemäßen Mischungen insbesondere auch bei transgenem Saatgut eingesetzt worden können, wobei die aus diesem Saatgut hervorgehenden Pflanzon zur Expression eines gegen Schädlinge gerichteten Proteins befähigt sind. Durch die Behandlung solchen Saatguts mit den orfindungagemüßen Mitteln können bestimmte Schädlinge bereits durch die Expression des z.B. insektiziden Proteins kontrolliert werden, und es zusätzlich übernsehenderweise zu einer synergistischen WirkungsergNnzung mit den erfindungsgeremäßen Mitteln kommt, was die Effektivität des Schutzes vor Schädlingsbefall noch einmal verbessert.

Die erfindungsgenmäßen Mittel eignen sich zum Schutz von Saatgut jeglicher Pflanzensorte, die in der Landwirtschaft, im Gewächshaus, in Forsten, im Gartenbau oder im Weinenbau eingesetzt wird, Inabesondere handelt es sich dabei um Saatgut von Mais, Erdnuss, Canola, Raps, Mohn, Olive, Kokosnuss, Kakao, Soja, Baumwolle, Rübe (z, B. Zückerrübe und Futterrübs), Reis, Hirse, Weizen, Gerste, Hafer, Roggen, Sonnenblume, Zuckerrohr oder Tabak. Die erfindungsgemäßen Mittel eigenen sich ebenfalls zur Behandlung des Saatguts verschiedener Gernüsesorten, wie z.B. Broccoli, Blumenkohl, Weißkohl, Tomate, Paprika, Malone, Zucchini und Gurken, oder verschiedener Kornobstgewächse, wie z.B. Apfel oder Birne. Besondere Bedeutung kommt der Behandlung des saatguts von Mais, Soja, Baumwolle, Weizen und Canola oder Raps zu.

Wie vorstehend bereits erwähnt, kommt auch der Behandlung von transgenem Saatgut mit einem erflindungsgemäßen Mittel eine besondere Bedeutung zu. Dabei handelt es sich um das Saatgut von Pflanzen, die in der Regel zumindest ein heterologes Gen enthalten, das die Expression eines Polypeptids mit insbesondere Insektiziden Eigenschaften steuert. Die heterologen Gene in transgenem Saatgut können dabei aus Mikroorganismen wie *Bacillus, Rhizobium, Pseudomonas*. *Serralia, Trichoderma, Clavibacter,* Glomus oder *Gliocladium* stammen. Die vorliegende Erfindung eignet sich besonders für die Behandlung von transgenem Saatgut, das zumindest ein heterologes Gen enthält, das aus *Bacillus sp.* stammt und dessen Genprodukt Wirksamkeit gegen Maiszünsler und/oder Maiswurzel-Bohrer zeigt.

Besonders bevorzugt handelt es sich dabei um ein heterologas Gen, das aus *Bacillus thuringiensis* stammt.

Im Rahmen der vorliegenden Erfindung wird das erfindungsgemäßes Mittel alleine oder in einer geeigneten Formulierung auf das Saatgut aufgebracht. Vorzugsweise wird das Saatgut in einem Zustand behandelt, in dem so stabil ist, dass keine Schaden bei der Behandlung auftreten. Im Allgemeinen kann die Behandlung des Saatguts zu jedem Zeitpunkt zwischen der Ernts und der Aussaat erfolgen. Üblicherweise wird Saatgut verwendet das von der Pflanze getrennt und von Kolben, Schalen, Stängeln, Hülle, Wolle oder Fruchtfleisch befreit wurde.

Im Allgemeinen muss bei der Behandlung des Saatguts darauf geachtet werden, dass die Menge des auf das Saatgut aufgebrachten erfindungsgemäßen Mittels und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmte Aufwandmengen phytotoxische Effekte zeigen können,

Die ergndungsgemäßen Mittel können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Saatgut aufzubringen, Geeignote Formulierungen und Verfahren für die Saatgutbehandtung sind dem Fachmann bekannt und werden z.B. in den folgenden Dokumenten beschrieben: US 4,212,417 A, US 4,245,432 A, US 4,808,430 A, US 5,876,739 A, US 2003/0176428 A1, WO 2002/080675 A1, WO 2002/028186 A2,

Die Wirkstoffe bzw. Wirkstoffkombinationen können in die üblichen Formulierungen überfuhrt werdon, wie Lösungen, Emulsionen, Spritzpulver, Suspensionen, Pulver, Stäubemittel, Pasten, lösliche Pulver, Granulate, Suspensions-Emulsions-Konzentrate, Wirkstoff imprägnierte Natur- und synthetische Stoffe sowie Feinstverkapselungen in polymeren Stoffen.

Diese Formulierungen werden in bekannter Weise hergestellt, z. B, durch Vermischen der Wirkstoffe mit Streckmitteln, also flüssigen Lösungsmitteln und/oder festen Trägerstoffen, gegebenenfalls unter Verwondung von oberflächenaktiven Mitteln, also Emulgiermitteln und/oder Dispergiermitteln und/oder schaumerzeugenden Mitteln.

Im Faile der Benutzung von Wasser als Streckmittel können z.B, auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängeln; als Emulgier- und/oder schaumerzeugende Mittel kommen in Frage: z.B. nicht-ionogene und anionische Emulgatoren, wie Polyoxyethylen-Fettsäure-Ester, Potyoxyethyten-Fettalkohol-Ether, z.B. Alkylarylpolyglykolether, Alkylsulfonate, Alkylsulfate, Arylsulfonate sowie Eiweißhydrolysate, als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocysninfarbstoffe und Spurennährstoffe wie Salze von Eisen, Mangan, Bor, Kupfer, Kobalt, Molybdän und Zink verwendet werden.

Die Formulierungen enthalten im Allgemeinen zwischen 0,1 und 95 Gewichtsprozent an Wirkstoffen einschließlich der safenden Wirkstoffe, vorzugsweise zwischen 0,5 und 90 %.

Die Wirkstoffkombinationen werden im Allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden,

Die Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind, Auch eine Mischung mit anderen bekannten Wirkstoffen, wie Fungiziden, Insektiziden, Akariziden, Nematiziden, Lockstoffen, Sterilantien, Bakteriziden, Schutztoffen gegen Vogelfraß, Wuchsstoffen, Pflanzenährstoffen und Bodenstruktur-Verbesserungmiftln ist möglich. Für bestimmte Anwendungszwecke, insbesondere im Nachauflauf-Verfahren,

kann es ferner vorteilhaft sein, in die Formulierungen als weitere Zusatzstoffe pflanzenverträgliche mineralische oder vegetabilische Öle (z.B. das Handelspräparat "Rako Binol") oder Ammoniumsalze wie z.B. Ammoniumsulfat oder Ammoniumrhodanid aufzunehmen.

Die Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Welse, z.B. durch Gießen, Spritzen, Sprühen, Stäuben oder Strauen.

Die Aufwandmengen der Wirkstoffkombinationen können in einem gewissen Bereich variiert werden; sie hängen u.a. vom Wetter und von den Bodenfaktoren ab. Im Allgemeinen liegen die Aufwandmengen zwischen 0,005 und 5 kg pro ha, vorzugsweise zwischen 0,01 und 2 kg pro ha, besondars bevorzugt zwischen 0,05 und 1,0 kg pro ha.

Die Wirkstoffkombinationen können vor und nach dem Auflaufen der Pflanzen appliziert werden, also im Vorauflauf und Nachauflauf-Verfahren.

Die einzusetzenden Safener können je nach ihren Eigenschaften zur Vorbehandlung des Saatgutes der Kulturpflanze (Beizung der Samen) verwendet weiden oder vor der Saat in die Saatfurchen eingebracht oder zusammen mit dem Herbizid vor oder nach dem Auflaufen der Pflanzen angewendet werden.

Die Wirkstoffkombinationen eignen sich zur Bekämpfung von tierischen Schädlingen, vorzugsweise Arthropoden und Nematoden, insbesondere Insekten und Spinnentieren, die in der Landwirtschaft vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber. Aus der Ordnung der Diplopoda z.B. Blaniulus guttulatus. Aus der Ordnung der Chilopoda z.B. Geophilus carpophagus, Scutigera spp. Aus der Ordnung der Symphyla z.B. Scutigerella Immaculata, Aus der Ordnung der Thysanura z.B. Lepisma saccharina. Aus der Ordnung der Collembola z.B. Onychiurus arlatus. Aus der Ordnung der Orthoptera z.B. Acheta domesticus, Gryllotalpa spp., Locusta migratoria migratorioides, Melanoplus spp., Schistocerca gregaria. Aus der Ordnung der Blattaria z.B. Blatta orientalis, Periplaneta americana, Leucophaea maderao, Blattella germanica. Aus der Ordnung der Dermaptera z.B. Forficula auricularia. Aus der Ordnung der Isoptera z.B. Reticulitermes spp.. Aus der Ordnung der Phthiraptera z.B. Pediculus humanes corporis, Haematopinus spp., Linognathus spp. Trichodectes spp., Damalinia spp., Aus der Ordnung der Thysanoptera z.B. Hercinothrips femoralis, Thrips tabaci, Thrips palmi, Frankliniella occidentalis. Aus der Ordnung der Heteroptera z.B. Eurygasler spp., Dysdercus Intermedius, Plesma quadrata, Cimex lectularius, Rhodnius prolixus, Triatoma spp. Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanlgerum, Hyalopterus arundinis, Phylloxera vaslatrix, Pemphigus spp., Macrosiphum avenae, Myzus spp., Phorodon humuli, Rhopalosiphum padi, Empoasca spp., Euscelis bilobatus, Napholeitix cincliceps, Lecanium corni, Saissetia oleae, Laodelphax striatellus, Nilaparvata lugons, Aonidiella aurantii, Aspidiotus hederae, Pseudococcus spp., Psylia spp. Aus der Ordnung der Lepidoptera z.B. Pectinophora gossypiella, Bupalus piniarius, Cheimatobia brumata, Lithocolletis blancardella, Hyponomeula padella, Plutella xylostella, Malacosoma neustria, Euproctis chrysorrhoea, Lymantria spp., Bucculetrix thurberlella, Phyllocnistis oitrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae, Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochloariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dernestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus. Aus der Ordnung der Hymenoptera z.B. Diprion spp., Hoplocampa spp., Lasius spp., Monomorium pharaonis, Vespa spp. Aus der Ordnung der Diptera z.B. Aedes spp., Anopholes spp., Culex spp., Drosophila melanogaster, Musca spp., Fannia spp., Calliphora erythrocephala, Lucilia spp., Chrysomyia spp., Cuterebra spp., Gastrophilus spp., Hyppobosea spp., Stomoxys spp., Oestrus spp., Hypoderma spp., Tabanus spp., Tannia spp., Bibio hortulanus, Oscinella frit, Phorbia spp., Pegomyla hyoscyami, Ceratitis capitata, Dacus oleae, Tipula paludosa, Hylemyla spp., Liriomyza spp. Aus der Ordnung der Siphonaptera z.B. Xenopsylla cheopis, Ceratophyllus spp.

Aus der Klasse der Arachnida z.B. Scorpio maurus, Latrodectus mactans, Acarus siro, Argas spp., Ornithodoros spp., Dermanyssus gallinae, Erlophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia practiosa, Panonychus spp., Tetranychus spp., Hemitarsonomus spp., Brovipalpus spp.

Zu den pflanzenparasitären Nematoden gehören z.B. Pratylenchus spp., Radopholus similis, Ditylenchus dipsaci, Tylenchulus semipenetrans, Heterodera spp., Globodera spp., Meloidogyne spp., Aphelenehoides spp., Longidorus spp., Xiphinema spp., Trichodorus spp., Bursaphelenchus spp.

Die Wirkstoffkombinationen können ferner beim Einsatz als Insektizide in ihren handelsüblichen Formulierungen sowie in den aus diesen Formulierungen bereiteten Anwendungsformen in Mischung mit weiteren Synergisten vorliegen, Synergisten sind Verbindungen, durch die die Wirkung der Wirkstoffe gesteigert wird, ohne dass der zugesetzte Synergist selbst aktiv wirksam sein muss,

Der Wirkstoffgehalt der aus den handelsüblichen Formulienmgen bereiteten Anwendungsformen kann in weiten Bereichen variieren. Die Wikstoffkonzentration der Anwendungeformen kann von 0,0000001 bis zu 95 Gew.-% Wirkstoff, vorzugsweise zwischen 0,0001 und 1 Gew.-% liegen.

Die Anwendung geschicht in einer den Anwendungsformen angepassten üblichen Weise.

Erfindungsgemäß können alle Planzen und Pflanzenteile behandelt werden. Unter Pflanzen werden hierbei alle Pflanzen und Pflanzenpopulationen verstanden, wie erwünschte und unerwünschie Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzentellen gehört auch Erntegut sowie vegetatives und generatives Vermehrungsmaterial, beispielsweise Stecklinge, Knollen, Rhiozome und Ableger. Die erfindungsgemaßen Kombinationen eignen sich insbesondere auch zur Behandlung des Saatguts der vorstehend genannten Kulturpflanzen

Die erfindungsgemäße Behandlung der Pflanzen und Pflanzenteile oder des Saatguts mit don Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Planzenteile" wurde oben erläutert.

Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wickungsspektrums und/oder eine Verstärkung der Wirkung der erfindungsgemäß verwendbaren Stoffe und Mittel, besseres Pflanzenwachstum, erhöhte Tole-ranz gegenüber hohen oder niedrigen Temperaturen, erhöhte Toleranz gegen Trockenheit oder gegen Wasser- bzw. Budensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres. Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Relfe, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten

durch in den Pflanzen entstehende Toxine, insbesondere solche, die durch das genetische Material aus *Bacillus thuringiensis* (z.B, durch die Gene CryIA(a), CryIA(b), CryIA(c), CryIIA, CryIIIA, CryIIIB2, Cry9c Cry2Ab, Cry3Bb und CryIF sowie deren Kombinationen) In den Pflanzen erzeugt werden (im folgenden "Bt Pflanzen"). Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschien Bigenschaften ("Traits") verleihenden Gene können such in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handolsbezeichungen YIELD GARD® (z.B, Mais, Baumwolle, soja), KnockOut® (z.B. Mais), StarLink® (z.B. Mais), Bollgard® (Baumwolle), Nucotn® (Baumwolle) und NawLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen und/oder deren Saatgut können besonders vorteilhaft erfindungsgemäß mit den Wirkstoffmischungen behandelt werden. Die bei den Mischungen oben angegebenen Vorzugsbereiche gelten auch für die Behandlung dieser Pflanzen bzw. deren Saatgut. Besonders hervorgehoben sei die Pflanzen- und Saatgutbehandlung mit den im vorliegenden Text speziell aufgeführten Mischungen.

Die gute insektizide Wirkung der erfindungsgemäßen Wirkstoffkombinationen geht aus den nachfolgenden Beispielen hervor, Während die einzeinen Wirkstoffe in der Wirkung Schwächen aufweisen können, zeigen die Kombinationen eine überraschend gesteigerte insektizide Wirkung.

Berechnungsformel für den Abtötungsgrad einer Kombination aus zwei Wirkstoffen

Die zu erwartende Wirkung für eine gegebene Kombination zweier Wirkstoffe kann (vgl. COLBY, S.R.; "Caculating Synergistic and Antagonistic Responses of Herbicide Combinations", Weeds 15, Seiten 20-22, 1967); berechnet werden:

Wenn

X= den Abtötungsrad, ausgedrückt in % der unbehandelten Kontrolle, beim Einsatz des Wirkstoffes A in einer Aufwandmenge von m ppm,

Y = den Ablötungsrad, ausgedruckt in % der unbehandelten Kontrolle, beim Einsatz des Wirkstoffes B in einer Aufwandmenge von n ppm,

E = den Abtötungsrad, ausgedrückt in % der unbehandelten Kontrolle, beim Einsatz des Wirkstoffes A und B in Aufwandmengen von m und n ppm bedeutet,

dann ist

$$E = X + Y - \frac{X \times Y}{100}$$

Ist die talsächliche insektizide Abtötungsgrad größer als berechnet, so ist die Kombination in ihrer Abtötung überadditiv, d.h. es liegt ein synergistischer Effekt vor. In diesem Fall muss der tatsächlich beobachtete Abtötungsgrad größer sein als der aus der oben angeführten Formel errechnete Wert für den erwarteten Abtötungsgrad (E).

## Beispiel A

**Myzus persicae -Test**

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit mit emulgatorhaltigem Wasser auf die gewünschte Konzentration.

Kohlblätter (*Brassica oleracea*), die stark von der Grünen Pfirsichblattlaus (*Myzus persicae*) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, dass alle Blattlause abgetötet wurden; 0 % bedeutet, dass keine Blattläuse abgelötet wurden. Die ermittelten Abtötungswerte verrechnet man nach der Colby-Formel.

Bei diesem Test zeigt z. B. die folgende Wirkstoffkombination gemäß vorliegender Anmeldung eine synergistisch verstärkte Wirksamkeit im Vergleich zu den einzeln angewendeten Wirkstoffen;

**Tabelle A1**

**Myzus persicae - Test**

| Wirkstoff | Konzentration in ppm | Sterbilchkeit in % nach 1$^{d}$ | |
|---|---|---|---|
| Clothianidin | 0,8 | 40 | |
| Isoxadifen-E WG 50 | 100 | 0 | |
| Clothiandin + Isoxadifen-E WG 50 (1 :125) | | obs.* | cal.** |
| | 0,8 + 100 | 75 | 40 |
| Mefenpyr-diethyl WP 20 | 100 | 0 | |
| Clothianidin +Mefenpyr-diethyl WP 20 (1 : 125) | | obs.* | cal.** |
| | 0,8 + 100 | 60 | 40 |

* obs. beobachteter Wert
** cal = nach der Colby-Formel errechneter Wert

**Tabelle A2**

**Myzus persicae - Test**

| Wirkstoff | Konzentration in ppm | Sterblichkeit in % nach 1$^{d}$ | |
|---|---|---|---|
| Imidacloprid | 0,8 | 45 | |
| Isoxadifen-E WG 50 | 100 | 0 | |
| Imidacloprid + Isoxadifen-E WG 50 (1: 125) | | obs.* | cal.** |
| | 0,8 + 100 | 85 | 45 |

* obs.= beobachteter Wert
** cal.= nach der Colby-Formel orrechneter Wert

**Tabelle A3**

**Myzus persicae - Test**

| Wirkstoff | Konzentration in ppm | Sterblichkeit in % nach 1$^{d}$ | |
|---|---|---|---|
| **Thiacloprid** | 0,8 | 10 | |
| **Isoxadifen-EWG 50** | 100 | 0 | |
| **Thiacloprid + Isoxadifen-EWG 50 (1:125)** | | **obs.*** | **cal.**** |
| | **0,8+ 100** | **30** | **10** |
| **Mefeopyr-diethyl WP 20** | 100 | 0 | |
| **Thiacloprid + Mefeopyr-diethyl WP 20 (1: 125)** | | **obs.*** | **cal.**** |
| | **0,8+ 100** | **55** | **10** |

* obs. = beobachteter Wert
** cal.= nach der Colby-Formel errechneter Wert

**<u>Beispiel</u> B**

**Phaedon cochleariae - Larven -Test**

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oleracea*) werden durch Tauchen in die Wirkstoffzubereitung der gewünschten Konzentration behandelt und mit Larven des Meorrettichblattkäfers (*Phaedon cochleariae*) besetzt, solange die Blätter noch feucht sind.

Nach der gewünschten Zeit wird die Abtötung in % bestimmt. Dabei bedeutet 100 %, dass alle Käferlarven abgetötet wurden; 0 % bedeutet, dass keine Käferlarven abgetötet wurden. Die ermittelten Abtötungswerte verrechnet man nach der Colby-Formel.

Bei diesem Test zeigte die folgende Wirkstoffkombination gemäß vorliegender Anmeldung eine synergistisch verstärkte Wirksamkeit im Vergleich zu den einzeln angewendeten Wirkstoffen:

**<u>Tabelle B1</u>**

**Phaedon cochleariae Larven - Test**

| Wirkstoff | Konzentration in ppm | Sterblichkeit in % nach 1$^d$ | |
|---|---|---|---|
| **Clothianidin** | 4 | 40 | |
| **(IIe-5) WP 20** | 200 | 0 | |
| **Clothiandin + (IIe-5) WP 20 (1: 50)** | | **<u>obs</u>.*** | **<u>cal</u>.**** |
| | **4+100** | **15** | **0** |

* obs. = beobachteter Wert
** cal. = nach der Colby-Formel errechneter Wert

**<u>Tabelle B2</u>**

**Phaedon cochleariae Larven - Test**

| Wirkstoff | Konzentration in ppm | Sterblichkeit in % nach 1$^d$ | |
|---|---|---|---|
| **Imidacloprid** | 20 | 65 | |
| **(IIe-5) WP 20** | 100 | 0 | |
| **Imidacloprid + (IIe-5) WP 20 (1: 5)** | | **<u>obs</u>.*** | **<u>cal</u>.**** |
| | **20 + 100** | **90** | **65** |

* obs.= beobachteter Wert
** cal. = nach der Colby-Formel errechneter Wert

**<u>Tabelle B3</u>**

**Phaedon cochleariae Larven - Test**

| Wirkstoff | Konzentration in ppm | Sterblichkeit in % nach 1$^d$ | |
|---|---|---|---|
| **Imidacloprid** | 20 | 75 | |
| **Isoxadifen-E WG 50** | 100 | 0 | |
| **Imidacloprid + Isoxadifen-E WG 50 (1 : 5)** | | **<u>obs</u>.*** | **<u>cal</u>.**** |

(fortgesetzt)

**Phaedon cochleariae Larven - Test**

| Wirkstoff | Konzentration in ppm | Sterblichkeit in % nach 1[d] | |
|---|---|---|---|
| | **20 + 100** | **100** | **75** |
| * obs. = beobachteter Wert<br>** cal.= nach der Colby-Formel errechneter Wert | | | |

**Tabelle B4**

**Phaedon cochleariae Larven - Test**

| Wirkstoff | Konzentration in ppm | Sterblichkeit in % nacht 1[d] | |
|---|---|---|---|
| **Thiacloprid** | 20 | 45 | |
| **(IIe-5) WP 20** | 100 | 0 | |
| **Thiacloprid + (IIe-5) WP 20 (1 : 5)** | | **obs.*** | **cal.**** |
| | **20 + 100** | **80** | **45** |
| * obs. = beobachteter Wert<br>** cal.= nach der Colby-Formel errechneter Wert | | | |

**Beispiel C**

**Plutella xylostella -Test (sensibler Stamm)**

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und Verdünnt das Konzentrat mit emulgstorhaltigem Wasser auf die gewünschte Konzentration.

Kohlblätter (*Brassica oleracea*) werden durch Tauchen in die Wirkstoffzubereitung der gewünschten Konzentration behandelt und mit Raupen der Kohlschabe (*Plutella xylostella,* sensibler Stamm) besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden. Die ermittelten Ablötungswerte verrechnet man nach der Colby-Formel.

Bei diesem Test zeigte die folgende Wirkstoffkombination gemäß vorliegender Anmeldung eine synergistisch verstärkte Wirksamkeit im Vergleich zu den einzeln angewendeten Wirkstoffen:

**Tabelle C1**

**Plutella zylostella - Test (sensibler Stamm)**

| Wirkstoff | Konzentration in ppm | Sterblichkeit in % nach 1[d] | |
|---|---|---|---|
| **Imidacloprid** | 20 | 40 | |
| **Isoxadifen-E WG 50** | 50 | 0 | |
| **Imidacloprid + Isoxadifen-E WG 50 (1 : 2,5)** | | **obs.*** | **cal.**** |
| | **20+50** | **75** | **40** |
| * obs. = beobachteter Wert<br>** cal. = nach der Colby-Formel errechneter Wert | | | |

**<u>Tabelle CZ</u>**

**Plutella zylostella - Test (sensibler Stamm)**

| Wirkstoff | Konzentration in ppm | sterblichkeit In % nach 1[d] | |
|---|---|---|---|
| **Thiacloprid** | 20 | 80 | |
| **Isoxadifen-ethyl WG 50** | 50 | 0 | |
| **Thiacloprid + Isoxadifen-ethyl WG 50 (1 : 2.5)** | | **obs.*** | **cal.**** |
| | **20 + 50** | **100** | **80** |
| * obs. = beobachteter Wert<br>** cal. = nach der Colby-Formel errechneter Wert | | | |

## Patentansprüche

1. Mittel enthaltend einen wirksamen Gehalt an einer Wirkstoffkombination umfassend mindestens eine Verbindung ausgewählt aus

   (a) Imidacloprid, Clothianidin, Thiacloprid,
   und mindestens eine Verbindung ausgewühlt aus
   (b) Cloquintocet-mexyl, Isoxadifen-ethyl, Mefenpyr-diethyl, Fenclorim, Cumyluron, Dimepiperate, Ile-5

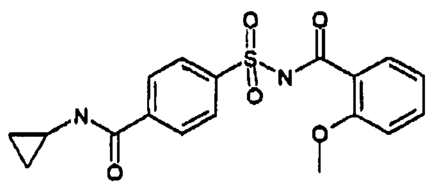

II-e-5,

2. Mittel gemäß Anspruch 1, in der Komponente (a) aus Imidacloprid, Clothiunidin und Thiacloprid sowie die Komponente (b) aus isoxadifen-ethyl und

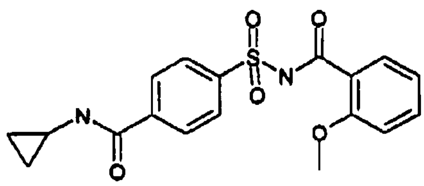

II-e-5,

   besteht.

3. Verwendung eines Mittels gemäß Anspruch 1 oder 2 zum Bekämpfen von Arthropoden.

4. Verfahren zur Bekämpfung von Arthropoden, **dadurch gekennzeichnet, dass** man Mittel gemäß Anspruch 1 oder 2 auf Insekten und/oder Spinnentiere und/oder deren Lebensraum einwirken lasst.

5. Verwendung eines Mittels gemäß Anspruch 1 oder 2 zum Schutz von Saatgut vor Arthropoden.

6. Verfahren zum Schutz von Saatgut vor Arthropoden, **dadurch gekennzeichnet, dass** man das Saatgut mit einem Mittel gemäß Anspruch 1 oder 2 behandelt.

7. Saatgut, **dadurch gekennzeichnet, dass** es mit einem Mittel gemäß Anspruch 1 oder 2 behandelt wurde.

## Claims

1. Composition comprising an active amount of a combination of active compounds comprising at least one compound selected from

   (a) imidacloprid, clothianidin and thiacloprid,
   and at least one compound selected from
   (b) cloquintocet-mexyl, isoxadifen-ethyl, mefenpyr-diethyl, fenclorim, cumyluron, dimepiperate and IIe-5

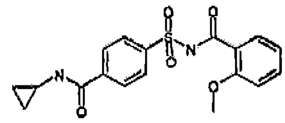

II-e-5.

2. Composition according to Claim 1, in which component (a) consists of imidacloprid, clothianidin and thiacloprid and component (b) consists of isoxadifen-ethyl and

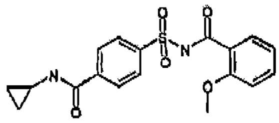

II-e-5.

3. Use of a composition according to Claim 1 or 2 for controlling arthropods.

4. Method for controlling arthropods, **characterized in that** compositions according to Claim 1 or 2 are allowed to act on insects and/or arachnids and/or their habitat.

5. Use of a composition according to Claim 1 or 2 for protecting seed against arthropods.

6. Method for protecting seed against arthropods, **characterized in that** the seed is treated with a composition according to Claim 1 or 2.

7. Seed **characterized in that** it was treated with a composition according to Claim 1 or 2,

## Revendications

1. Agent contenant une teneur active en une combinaison d'agents actifs comprenant au moins un composé choisi parmi

   (a) l'imidaclopride, la clothianidine, le thiaclopride, et au moins un composé choisi parmi
   (b) le cloquintocet-mexyl, l'isoxadifène-Athyle, le méfenpyr-diéthyle, le fenclorim, la cumylurone, le dimépipérate, IIe-5

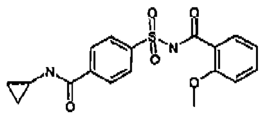

II-e-5,

2. Agent selon la revendication 1, dans lequel le composant (a) est constitué par l'imidaclopride, la clothianidine et le thiaclopride, et le composant (b) par l'isoxadifène-éthyle et

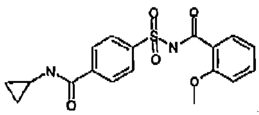

II-a-5,

3. Utilisation d'un agent selon la revendication 1 ou 2 pour lutter contre les arthropodes.

4. Procédé de lutte contre les arthropodes, **caractérisé en ce qu'**un moyen selon la revendication 1 ou 2 est laissé agir sur des insectes et/ou des arachnides et/ou leur habitat.

5. Utilisation d'un agent selon la revendication 1 ou 2 pour protéger des graines des arthropodes.

6. Procédé de protection de graines des arthropodes, **caractérisé en ce que** les graines sont traitées avec un agent selon la revendication 1 ou 2.

7. Graine, **caractérisée en ce qu'**elle a été traitée avec un agent selon la revendication 1 ou 2.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 192606 A1
- EP 580533 A2
- EP 376279 A2
- EP 235725 A2
- EP 0192060 A1
- EP 0376279 A2
- EP 0235725 A2
- US 6251827 A
- US 4212417 A
- US 4245432 A
- US 4808430 A
- US 5876739 A
- US 20030176428 A1
- WO 2002080675 A1
- WO 2002028186 A2


### In der Beschreibung aufgeführte Nicht-Patentliteratur


- The Pesticide Manual. British Crop Protection Council, 2003
- **COLBY, S.R.** Caculating Synergistic and Antagonistic Responses of Herbicide Combinations. *Weeds,* 1967, vol. 15, 20-22